Europäisches Patentamt

European Patent Office

Office européen des brevets

(11) Publication number: **0 174 918**
A1

## (12) EUROPEAN PATENT APPLICATION

(21) Application number: **85870113.9**

(22) Date of filing: **12.08.85**

(51) Int. Cl.⁴: **B 01 D 13/04**
**B 01 D 53/22**

(30) Priority: **13.08.84 US 640078**

(43) Date of publication of application:
**19.03.86 Bulletin 86/12**

(84) Designated Contracting States:
**AT BE DE FR GB IT NL SE**

(71) Applicant: **Monsanto Company**
**Patent Department 800 North Lindbergh Boulevard**
**St. Louis Missouri 63167(US)**

(72) Inventor: **Kraus, Menahem Alfred**
**603 Waters Edge**
**Ann Arbor Michigan 48105(US)**

(74) Representative: **McLean, Peter et al,**
**Monsanto Europe S.A. Patent Department Avenue de**
**Tervuren 270-272 Letter Box No 1**
**B-1150 Brussels(BE)**

(54) Composite gas separation membranes.

(57) A membrane having an improved separation factor with respect to at least one gas of a gaseous mixture through the incorporation of an in situ formed non-porous intermediate layer (8) between a porous support (4) and an in situ-formed separating layer (2). The intermediate layer (8) is comprised of a polymer material which is highly permeable to the at least one gas relative to the separating layer (2) which has a separation factor for the at least one gas which is greater than the separation factor exhibited by the intermediate layer (8).

FIG. 4.

EP 0 174 918 A1

Croydon Printing Company Ltd.

## COMPOSITE GAS SEPARATION MEMBRANES

This invention relates to composite gas separation membranes which have a non-porous intermediate layer between a separating layer and a porous support.

### PRIOR ART

Klass, et al, U.S. Patent No. 3,616,607, Stancell, et al., U.S. Patent No. 3,657,113 and Yasuda, U.S. Patent No. 3,775,303 exemplify gas separation membranes having superimposed membranes on a porous support.

A technique has also been developed of casting very thin polymer films on water, then to be picked up on porous supports. Since the films are very hard to handle, multiple applications have to be made and the technique is very hard to scale up.

Such composite membranes for gas separations have not been without other problems. For instance, Browall in U.S. Patent No. 3,980,456 discloses the fabrication of composite membrane films for separation of oxygen from air comprising a support of microporous polycarbonate sheet and a separately formed, i.e., preformed, superimposed ultrathin separation membrane of 80 percent poly(phenylene oxide) and 20 percent organopolysiloxane-polycarbonate copolymer. In the fabrication of the membranes the exclusion from the manufacturing area of extremely small particulate impurities, i.e., particles below about $3 \times 10^{-7}$ meters in size, is stated by Browall to be impractical or impossible. These fine particles may be deposited under or between preformed ultrathin membrane layers and, because of their large size in comparison to the ultrathin membranes, puncture the ultrathin membranes. Such breaches reduce the effectiveness of the membrane. The Browall patent discloses applying a preformed organopolysiloxane-polycarbonate copolymer sealing material over the ultrathin membrane to cover the breaches caused by the fine particles.

BACKGROUND AND DEFINITION OF TERMS

In practice, the separation factor with respect to a given pair of gases for a given membrane can be determined employing numerous techniques which provide sufficient information for calculation of permeability constants or permeabilities for each of the pair of gases. Several of the many techniques available for determining permeability constants, permeabilities, and separating factors is disclosed by Hwang, et al, Techniques of Chemistry, Volume VII, Membranes in Separations, John Wiley & Sons, 1975 (herein incorporated by reference) at Chapter 12, pages 296 to 322.

An "intrinsic" separation factor as referred to herein is the separation factor for a material which has no pores for gas flow across the material, and is the highest achievable separation factor for the material. Such a material may be referred to as being continuous or non-porous. The intrinsic separation factor of a material can be approximated by measuring the separation factor of a relatively thick compact membrane of the material. However, several difficulties may exist in the determination of an intrinsic separation factor including imperfections introduced in the preparation of the compact membrane such as the presence of pores, the presence of fine particles in the compact membrane, undefined molecular order due to variations in membrane preparation, and the like. Consequently, the "determined intrinsic" separation factor can be lower than the intrinsic separation factor. Accordingly, a "determined intrinsic" separation factor as employed herein refers to the separation factor of a dry, relatively thick compact membrane of the material.

## DETAILED DESCRIPTION OF THE INVENTION

The composite gas separation membrane in accordance with this invention exhibits with respect to at least one pair of gases a separation factor which is improved through the use of a non-porous intermediate layer comprised of a polymer material which is extremely permeable to gases, and of low selectivity. Interposing such a thin intermediate layer of such a polymer between the porous support and the thin, dense selective layer has a number of beneficial effects such as allowing the thin separating layer to withstand reasonable differential pressure. For such a thin separating layer to withstand differential pressures without the intermediate layer, the separating layer's thickness must be at least equal to the pore diameter of the porous support. The intermediate layer is non-porous, thus, in effect creates an essentially non-porous support combination for the separating layer.

Further, in accordance with the invention the improvement in composite gas separating membranes through the inclusion of an intermediate non-porous layer allows for the use of highly porous materials such as porous glass as the support. The use of many porous supports is limited by low surface porosity and by large pore sizes dictating thick coating layers in order to prevent collapse into the pores. Also the coating layers might be imperfect, especially when very thin which is desirable for high permeability rates. An intermediate non-porous polymer layer made of a very highly permeable polymer, coated directly onto the porous support can minimize all these potential problems. The intermediate non-porous layer due to its very high gas permeability can channel gas flow to the pores of the porous substrate more effectively than the separating polymer itself which will usually be much less permeable. The intermediate layer will decrease the probability of rupturing the separating layer through the pores of the porous support, thus making possible the use of thinner membrane separating layers. Thirdly, the intermediate layer can act as an undercoating for an imperfect separating layer following the principles described in Henis, et al, U.S. Patent No. 4,230,463 which is hereby incorporated by reference. However, unlike the Henis Patent in which the sealing material is applied as the layer furthest removed from the porous substructure, the sealing material of the present procedure is applied between the porous support and the separating layer. The overall effect will be a substantial improvement in selectivity without a major loss in permeability. In addition the separating membrane of the Henis, et al patent has a substantial void volume, that is, anisotropic, whereas the present inventive composite membrane involves a thin, dense, essentially non-porous separating layer. Moreover, coagulation or void formation in the top, selective layer are detrimental to the membranes of the present invention.

The important properties of the intermediate layer are, therefore, high permeability and thus little resistance to gas flow, good coatability on the porous support and the capability of being coated by the separating layer polymer. In the case of coating from solution the last two properties reduce to wetability of the support by the intermediate layer polymer solution and wetability of the intermediate layer by the separating layer polymer solution, for example, a contact angle of less than 90 degrees. This property is crucial for good membrane formation. Obviously none of the solvents used should be a good solvent for any of the previously deposited layers or porous support. Some of the preferred intermediate layer polymers are polydimethylsiloxanes, polyfluorophosphazenes and most preferred poly(trimethylsilyacetylenes).

The in situ-formed composite membranes of the invention need to avoid thickness. Direct deposition of a membrane forming solution on a porous support can lead to excessively thick membranes due to capillary action pulling solution into the pores and, hence, slow permeation rates. In order to avoid formation of membranes in the pores of the porous support, the porous support can be preimpregnated with a liquid of relatively high vapor pressure, which is either a solvent for the membrane polymer or a weak non-solvent, and miscible with the polymer solution. The precoating step inhibits volumetric flow of polymer solution into the porous support which could occur due to capillary forces. This optional formation step for the in situ-produced composite membranes could also be achieved by slight pressure on the porous support; however, the capillary forces are not a dominate factor in the present invention and the preimpregnation step is not necessary in order to form the inventive composite membranes.

Forming the composite membranes by solution coating is a preferred approach; however, the composite membranes of the invention are not limited to composite membranes produced by solution coating. For example, plasma deposition and related processes could be used to produce the inventive composite membrane.

Generally organic polymers or organic polymers mixed with inorganics are used to prepare the separating layer. Typical polymers suitable for the separation membrane according to the invention can be substituted or unsubstituted cross-linked or uncross-linked polymers and may be selected from polysulfones, poly(styrenes), including styrene-containing copolymers such as acrylonitrile styrene copolymers, styrene-butadiene copolymers and styrene-vinyl(benzylhalide copolymers); polycarbonates; cellulosic polymers, such as cellulose acetate, cellulose acetate-butyrate, cellulose propionate, ethyl cellulose, methyl cellulose, nitrocellulose, etc.; polyamides and polyimides, including aryl polyamides and aryl polyimides; polyethers; poly(arylene oxides) such as poly(phenylene oxide), substituted poly(phenylene oxides) and poly(xylene oxide); poly(esteramide-diisocyanate); polyurethanes; polyesters (including polyarylates), such as poly(ethylene terephthalate), poly(alkyl methacrylates), poly(acrylates), poly(phenylene terephthalate), etc.; polysulfides, polymers from monomers having alpha-olefinic unsaturation other than mentioned above such as poly(ethylene), poly(propylene), poly(butene-1), poly(4-methyl pentene-1)', polyvinyls, e.g., poly(vinyl chloride), poly(vinyl fluoride), poly(vinylidene chloride), poly(vinylidene fluoride), poly(vinyl alcohol), poly(vinyl esters) such as poly(vinyl acetate) and poly(vinyl propionate), poly(vinyl pyridines), poly(vinyl pyrrolidones), poly(vinyl ethers), poly(vinyl ketones), poly(vinyl aldehydes) such as poly(vinyl formal) and poly(vinyl butyral), poly(vinyl amides), poly(vinyl amines), poly(vinyl urethanes), poly(vinyl ureas), poly(vinyl phosphates) and poly(vinyl sulfates); poly(vinyl silanes); polyalkyls; poly(benzobenzimidazole); polyhydrazides; polyoxadiazoles, polytriazoles, poly(benzimidazole); polycarbodiimides; etc., and interpolymers, including block interpolymers containing repeating units from the above such as interpolymers of acrylonitrile-vinyl bromide-sodium salt of para-sulfophenylmethallyl ethers; and grafts and blends containing any of the foregoing.

Typically substituents providing substituted polymers include halogens such as fluorine, chlorine and bromine, hydroxyl groups; lower alkyl groups; lower alkoxy groups; monocyclic aryl; lower acyl groups and the like.

The weight percent of polymer in the solution of the separating layer solution may vary widely but is generally in the range from about 0.1 percent to about 10 percent by weight. The solution containing the polymeric material which forms the separating layer must be of a nature which will sufficiently wet the intermediate non-porous layer in order to provide suitable contact with the in situ- formed separating layer to the intermediate layer.

Suitable solvents for the solution containing the polymeric material which forms the separating layer include its solvents which have sufficient solubility to form coating solutions of the polymeric materials of the separating layer. These solvents can be selected from normally liquid alkanes, alcohols, ketones, ethers, esters, some substituted alkanes, alcohols, ketones, ethers, esters and the like; and mixtures thereof.

Generally organic polymers, organic polymers mixed with inorganics, or inorganic materials are suitable for the preparation of the porous support according to the invention. Typical polymers suitable for the porous support according to the invention can be substituted or unsubstituted, cross-linked or uncross-linked polymers as well as copolymers and mixtures thereof. Typical polymers suitable for the porous support are porous membrane materials prepared from the same polymers which are suitable for forming the separating layer. Other suitable porous supports or substrates are inorganics such as porous glass, porous metal, porous ceramics and the like.

The materials for the intermediate non-porous layer may be natural or synthetic substances, and are often polymers, and advantageously exhibit the appropriate properties to provide non-porous contact with the porous support. Synthetic substances include both addition and condensation polymers. Typical of the useful materials which can comprise the intermediate are polymers which can be substituted or unsubstituted and include synthetic rubbers, natural rubbers, organic prepolymers, poly(siloxanes) (silicone polymers); polysilazanes; polyurethanes; poly(epichlorhydrin); polyamines; polyimines; polyamides; acrylonitrile-containing copolymers such as poly(a-chloroacrylonitrile) copolymers; polyesters (including polyarylates), e.g., poly(alkyl acrylates) and poly-(alkyl methacrylates) wherein the alkyl groups have, say, 1 to about 8 carbons; polysebacates, polysuccinates, and alkyl resins; terpinoid resins; linseed oil; cellulosic polymers; polysulfones, especially aliphatic-containing polysulfones; poly(alkylene glycols) such as poly(ethylene glycol), poly(propylene glycol), etc.; poly(alkylene); polysulfates; polypyrrolidones; polymers from monomers having olefinic unsaturation such as poly(olefins), e.g., poly(ethylene), poly(propylene), poly(butadiene), poly(2,3-dichlorobutadiene), poly(isoprene), poly(chloroprene), poly(styrene) including poly(styrene) copolymers, e.g., styrene-butadiene copolymer, polyvinyls such as poly(vinyl alcohols), poly(vinyl aldehydes), poly(vinyl formal), poly(vinyl butyral), poly(vinyl ketones) [e.g., poly(methylvinylketone),] poly(vinyl esters) [e.g., poly(vinyl benzoate),] poly(vinyl halides) [e.g., poly(vinyl bromide),] poly(vinylidene halides), poly(vinylidene carbonate), poly(N-vinylmaleimide), etc., poly(1,5-cyclooctadiene), poly(methylisopropenylketone), fluorinated ethylene copolymer; poly(arylene oxides), e.g., poly(xylylene oxide); polycarbonates; poly(organophosphazenes); poly(vinyl silanes); poly-(silylacetylenes); polyphosphates, e.g., poly(ethylene-methylphosphate); and the like, and any interpolymers including block interpolymers containing repeating units from the above, and grafts and blends containing any of the foregoing. The polymers may or may not be cross linked after application to the porous separation membrane.

The solution containing the polymeric material which forms the intermediate non-porous layer must be of such a nature to sufficiently wet the porous support or porous support impregnated with suitable solvent in order to provide suitable contact of the in situ-formed intermediate layer to the porous support. Suitable solvents for the solution containing the polymeric material which forms the intermediate non-porous layer include normally liquid alkanes; aliphatic alcohols; aliphatic ketones; some halogenated alkanes; dialkylethers; aliphatic esters and the like; and mixtures thereof.

The solution containing the polymeric material which forms the separating layer must be of a nature which will sufficiently wet the intermediate non-porous layer in order to provide suitable contact with the in situ-formed separating layer to the intermediate layer. Suitable solvents for the solution containing the polymeric material which forms the separating layer include its solvents which have sufficient solubility to form coating solutions of the polymeric materials of the separating layer. These solvents can be selected from normally liquid alkanes, alcohols, ketones, ethers, esters, some substituted alkane, alcohols, ketones and the like; and mixtures thereof.

Optionally, the composite membrane consisting of a porous substrate, intermediate layer and separating layer, can be in situ coated with one or more additional layers of a highly permeable, non-selective polymer to further improve selectivity. The additional layer can be of a material identical to or different from that of the intermediate layer. The selectivity and permeability relationships of the additional coating to those of the separating layer are the same as those of the intermediate layer.

## DESCRIPTION OF THE DRAWINGS

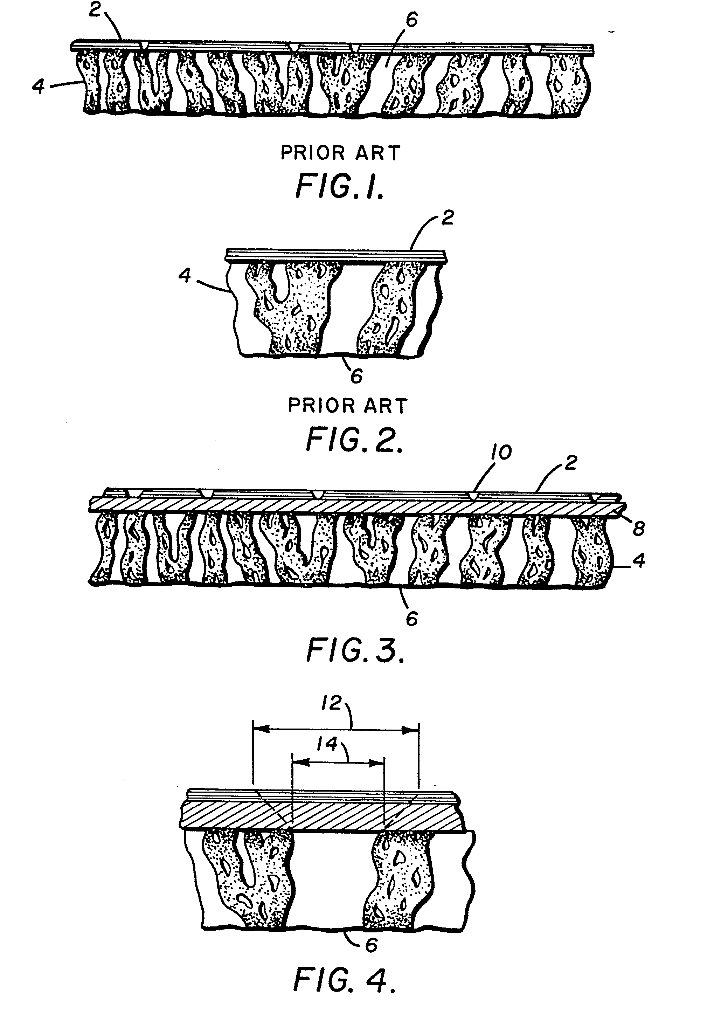

For a better understanding of the invention of the improved composite gas separation membrane, reference is made to Figures 3, 4, 5 and 6 which are in accordance with the invention and comparative Figures of 1 and 2 which are in accordance with the prior art. Prior art Figure 1 illustrates a typical composite separation membrane wherein a separating layer 2 is in contact with a porous support 4 having continuous pores 6. Figure 2 is an expanded view of a segment of Figure 1 more clearly illustrating the relationship of a thin separating layer of coating in contact with the porous support 4. The composite gas separation membrane in accordance with the invention is illustrated by Figure 2 wherein the intermediate non-porous layer 8 is shown in position between the separating layer 2 and porous support 4. In addition, defects 10 of the dense separating layer 2 are also indicated said defects extending through the coating of the separating layer. The defects are effectively sealed by the intermediate layer. Figure 4 is an enlarged segment of the improved composite gas separation membrane of Figure 2 wherein effective gas flow pore opening 12 is illustrated relative to the actual pore opening of pore 6. The spacing allowed by the intermediate layer 8 allows the gas being separated by separating layer 2 to funnel or more freely transmit to the pore 6 for flow through the membrane; thus, the operational effective pore size dimension 12 which is substantially larger than the actual pore size 14. Regarding Figure 2 of the prior art representation, the gas would substantially be transmitted through actual pore size opening and not have the benefit of the funneling effect.

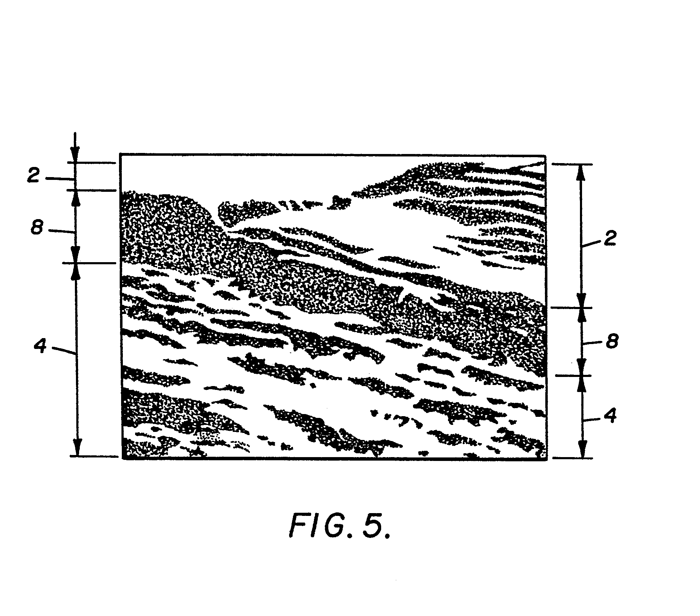

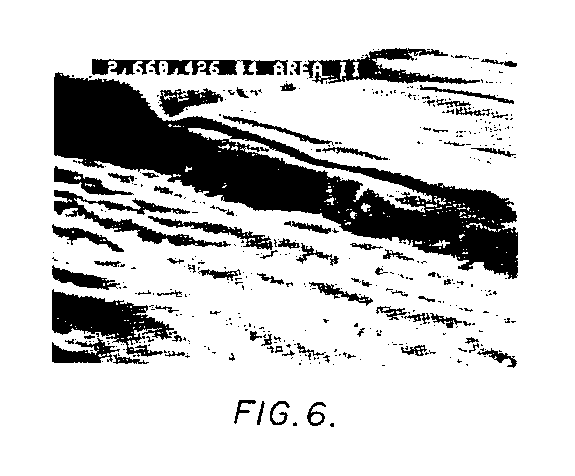

Figure 5 is a highly magnified drawing representation of electron microscope of the improved composite gas separation membrane according to the invention wherein a cross section of the separating layer 2, intermediate non-porous layer 8 and porous support 4 are shown; however, the illustration is not on a horizontal projection. The actual projection is about 30 degrees above the horizontal. Figure 6 is a photomicrograph taken through the use an electron microscope at a magnification of 50,000. The drawing of Figure 5 was made from the photomicrograph of Figure 6.

Preferred polymers for the intermediate layer are silicones, polyfluorophosphazenes, poly-(vinyl silanes), and polysilylacetylenes. Preferred examples of porous substrates are porous polypropylene, porous glass, porous polysulfone and the like. Preferred examples of separating polymers are cellulose acetate, polysulfone, polyethersulfone, polyimides, poly(4-methyl-1-pentene) and polyphenylene oxide and its derivatives. The important factors in applying the in situ-formed intermediate non-porous layer and the in situ-formed separating layer involve good wetting technique, hence low interfacial surface tension of, for example, the porous support by the intermediate polymer solution and of the intermediate non-porous layer by the separating layer polymer solution.

A separation factor (a/b), $\alpha$, for a membrane for a given pair of gases a and b is defined as the ratio of the permeability constant ($P_a$) of the membrane for gas a to the permeability constant ($P_b$) of the membrane for gas b. A separation factor, alpha, is also equal to the ratio of the reduced permeability ($P_a/\ell$) of a membrane of thickness 1 for gas a of a gas mixture to the reduced permeability of the same membrane to gas b, ($P_b/\ell$), wherein the permeability, $P/\ell$, for a given gas is the volume of gas at standard temperature and pressure (STP), which passes through a membrane per square centimeter of surface area, per second, for a partial pressure drop of 1 centimeter of mercury across the membrane per unit of thickness, and is expressed as $P = cm^3\text{-}cm/cm^2\text{-}sec\text{-}cmHg$.

The separation factor for the one gas of the intermediate non-porous layer to the separating layer is within the range of about 0.01 to about 8.0.

The side of the porous support in contact with the intermediate layer has a porosity of about 2 to 50%. Gases which can be separated by the membrane of this invention are, among others, carbon monoxide, nitrogen, argon, methane, ethane, carbon dioxide, hydrogen sulfide, acid gases and hydrogen. The intermediate non-porous layer has an average thickness which is equal to or greater than the average pore size in the porous support.

## EXAMPLES

The following table illustrates sixteen examples, thirteen of which are in accordance with the invention. Examples 2, 4 and 12 are for purposes of comparison and are not in accordance with the invention. The membranes of examples 2, 4 and 12 do not include an intermediate non-porous layer while the remaining thirteen examples illustrate various intermediate non-porous layers and the functionality of same as gas separators for $CO_2$/methane and oxygen/ nitrogen. In addition, various separating layers of polymeric materials are used in combination with the various intermediate layers. As can be seen from the examples, Examples 2, 4 and 12 have separation factors for carbon dioxide/methane of about 1 indicating that little or no selectivity was achieved due to imperfections in the dense separating layer. The same separating layer, that is a separating layer produced in the same manner as in Example 2, was utilized in Example 1 in combination with the intermediate non-porous layer illustrating for the same separating layer and substrate, a separation factor for carbon dioxide/methane of 19. The polyethersulfone separating layer of Example 3 in combination with the intermediate layer provides a separation factor for carbon dioxide/methane of 15 to 16 while the same separating layer on the same porous substrate without the intermediate layer has a separation factor of 1, i.e., no separation.

Example 14 illustrates an additional aspect of the inventive composite membrane wherein an additional top coating over the separating layer is applied with the resulting composite membrane having very desirable $CO_2$ methane separation factor of 40 and a $P/\ell$ for $CO_2$ of $46 \times 10^{-6}$. Example 15 illustrates the use of a composite membrane according to the invention wherein composite membrane has a separation factor for oxygen/nitrogen of 3.5 and a $P/\ell$ for oxygen of 30.

The composite membranes of Examples 1, 3, 5 through 11 and 13 through 16 were prepared in the following manner. A porous support membrane such as Celgard 2402, (a porous polypropylene in sheet form) was impregnated with toluene to completely fill the pores. Before the toluene evaporates the impregnated membrane was covered with a 2% by weight polyacetylene solution of poly(trimethylsilyl propyne) in cyclohexane. Excess solution was drained from the membrane and all solvents were allowed to evaporate. The membrane thus coated with the poly(trimethylsilyl propyne) was dried at room temperature to about 40° C. in a vacuum oven. The membrane was then coated with a 0.5 to 2% solution of separating polymer in a solvent which is a non-solvent for both the porous support and the intermediate layer such as 1,2-dichloroethane. Excess solution was drained and the solvent evaporated to yield the finished composite membrane.

Performance testing of the membranes as illustrated in the table, examples 1 through 16 was conducted in a standard test cell wherein the membrane is clamped into position with one side of the membrane at vacuum 5-20 Pascals (30-200 µHg) and the other side under pressure of the test gas mixture of approximately 66,600 to 200,000 Pascals (50 to 150 centimeters) of mercury. The feed composition for the standard test cell is comprised of air for Example 16 and an approximate ratio of 25%/75% by volume of $CO_2$ and $CH_4$ for Examples 1-15. After an equilibrium period the permeability was determined by following the pressure rise on the low pressure side of the membrane as a function of time. Selectivity was calculated by determining the composition of the permeated gas and comparing same to the feed gas composition.

TABLE

| Example | Porous Polypropylene (Celgard 2402) | Intermediate Layer | Separating Layer | $(P/\ell)CO_2 \times 10^6$ | $\alpha CO_2/CH_4$ |
|---|---|---|---|---|---|
| 1 | " | $[(CF_3CH_2O)_2P=N)]$ | Cellulose Triacetate 0.5% | 17 | 19 |
| 2 | " | - | - | Very High | 1 |
| 3 | " | " | Polyethersulfone | 5.5 | 15-16 |
| 4 | " | - | " | Very High | 1 |
| 5 | " | " | Cellulose Triacetate 2% | 3 | 29 |
| 6 | " | $NH_2(CH_2)_2NH$-$(CH_2)_2N(CH_2)_3Si=$ Silicone | Cellulose Triacetate 1% | 13 | 15 |
| 7 | " | " | Cellulose Triacetate 0.5% | 25 | 12-13 |
| 8 | " | "Ethyl Silicate" silicone | Cellulose Triacetate 1% | 12 | 18 |
| 9 | " | $(c=c)$ $CH_3$ $Si(CH_3)_3$ | Cellulose Triacetate | 26 | 28 |

36-21(6346)A

| Example | Porous Polypropylene (Celgard 2402 | Intermediate Layer | Separating Layer | $(P/\ell)CO_2 \times 10^6$ | $\alpha CO_2/CH_4$ |
|---|---|---|---|---|---|
| 10 | " | $\{C = C\}$ CH$_3$ Si(CH$_3$)$_3$ | Polyethersulfone | 20 | 22 |
| 11 | " | " | Polyimide | 24 | 41 |
| 12 | " | -- | Polyimide | Very high | 1.1 |
| 13 | " | $\{C = C\}$ CH$_3$ Si(CH$_3$)$_3$ | PPO | 134 | 13 |
| 14 | " | " | Brominated PPO | 40 | 16 |
| 15* | " | " | Polyimide | 46 | 40 |

| Example | Porous Polypropylene (Celgard 2402 | Intermediate Layer | Separating Layer | $(P/\ell)O_2 \times 10^6$ | $\alpha O_2/N_2$ |
|---|---|---|---|---|---|
| 16 | " | NH$_2$(CH$_2$)$_3$Si- Silicone | Poly(methylpentene) | 30 | 3.5 |

* top coated with polyfluorophosphazene

36-21(6346)A

CLAIMS:

1. A composite gas separation membrane comprising:

(a) a porous support;

(b) an in situ-formed non-porous intermediate layer which is in contact with the porous support on a first side; and

(c) an in situ-formed separating layer in contact with a second side of the non-porous intermediate layer, the intermediate layer having a determined intrinsic separation factor for one gas of a gaseous mixture over that of one or more remaining gases of the gaseous mixture which is less than the determined intrinsic separation factor of the material of the separating layer for the one gas, the separating layer having a determined intrinsic separation factor for the one gas which is less than the determined intrinsic separation factor for the material of the separating layer for the one gas with the composite gas separation membrane having a greater separation factor for the one gas than the separation factor of a composite gas separation membrane comprised of the porous support and the separating layer.

2. The composite gas separation membrane of Claim 1 in which the ratio of the separation factors for the one gas of the in situ-formed intermediate non-porous layer relative to the in situ-formed separating layer varies from about 0.01 to about 0.8.

3. The composite gas separation membrane of Claim 1 in which the separation factor exhibited by the composite gas separation membrane is at least about 25% greater than the determined intrinsic separation factor of a composite gas separation membrane comprised of the porous support and separating layer.

4.  The composite gas separation membrane of Claim 3 in which, with respect to at least one gas of a pair of gases of the gaseous mixture, the material of the in situ-formed intermediate non-porous layer has a higher permeability constant than does the material of the in situ-formed separating layer.

5.  The composite gas separation membrane according to Claim 3 in which, with respect to at least one gas, which gas is selected from the group consisting of carbon monoxide, nitrogen, argon, methane, ethane, carbon dioxide, hydrogen sulfide, acid gases, and hydrogen, the effective separating thickness of the composite gas separation membrane varies from about 200 angstroms to about $15 \times 10^{-6}$ meters.

6.  The composite gas separation membrane of Claim 1 in which the porous support first side surface area is comprised of from about 2 to about 50% pores.

7.  The composite gas separation membrane of Claim 1 in which the composite membrane is a film.

8.  The composite gas separation membrane of Claim 1 in which the composite membrane is a hollow fiber.

9.  The composite gas separation membrane of Claim 1 wherein the in situ-formed intermediate non-porous layer has an average dimensional thickness of at least twice that of the average dimensional thickness of the separating layer.

10.  The composite gas separation membrane of Claim 1 wherein the composite gas separation membrane has an additional in situ-formed non-porous layer of the material of the intermediate layer or a different polymeric material layer having permeability for the one gas substantially greater than the permeability of the separating layer and deposited on top of the separating layer.

11. The composite gas separation membrane of Claim 1 wherein the intermediate non-porous layer has an average dimensional thickness which is equal to or greater than the average pore size of the porous support.

12. The composite gas separation membrane of Claim 1 in which in respect to the one gas of the gaseous mixture, the composite membrane has a separation factor which is at least 60% of the determined separation factor of the material of the separating layer.

13. A method for forming a composite gas separation membrane, comprising:

(a) contacting a preformed porous support with a solution of polymeric material capable of forming a non-porous layer on a surface of the porous support;

(b) forming in situ an intermediate non-porous layer on one surface of the porous support;

(c) contacting the resulting preformed intermediate non-porous layer with a solution of a polymeric material capable of forming a separating layer on the resulting non-porous layer, the separating layer polymeric material having a greater selectivity for one gas of the gaseous mixture over other gases of a gaseous mixture relative to the polymeric material of the intermediate non-porous layer; and

(d) forming in situ a separating layer on the intermediate non-porous layer.

14. The method for forming a composite gas separation membrane according to Claim 13 wherein the in situ-formed separating layer in contact with the intermediate non-porous layer is non-self supporting as a layer relative to the pore size of the porous support.

15. The method according to Claim 13 wherein the solution of a polymeric material capable of forming the intermediate non-porous layer and the solution containing the polymer material capable of forming the separating layer contain about 0.1 to about 10% by weight of polymer in solvents which are non-solvents for respectively the material comprising the porous support and the intermediate non-porous layer.

16. The method for forming a composite gas separation membrane according to Claim 13 wherein the solution of the polymeric material capable of forming the intermediate non-porous layer has a contact angle when contacted with the porous support material or support material impregnated with a liquid of less than about 90° and the solution of the polymeric material capable of forming a separating layer in contact with the intermediate non-porous layer has a contact angle of less than about 90° relative to the intermediate non-porous layer.

17. The method for forming a composite gas separation membrane according to Claim 13 wherein the in situ-formed separating layer has defects and resulting low separation factors for one gas of a gaseous mixture relative to other gases of the gaseous mixture which are improved by the in situ-formed non-porous layers on one or both surfaces of the separating layer of a non-porous layer.

0174918

1/3

PRIOR ART

FIG. 1.

PRIOR ART

FIG. 2.

FIG. 3.

FIG. 4.

FIG. 5.

FIG.6.

0174918

Application number

EP 85 87 0113

## European Patent Office

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | EP-A-0 112 134 (SUMITOMO ELECTR. IND. LTD.) * Claims 1-5,7,8; page 15, line 1 - page 16, line 20; page 21, lines 12-19; page 22, lines 11-14; examples 4,8,10,13 * | 1,3-5, 7 | B 01 D 13/04 B 01 D 53/22 |
| Y | | 2,6,11 ,13-15 | |
| A | | 8,9 | |
| P,X | EP-A-0 134 055 (SHELL INT. RESEARCH MIJ B.V.) (publ. 13/03/1985) * Abstract; claims 1-9; page 3, lines 7-10; page 3, line 21 - page 6, line 16; page 7, lines 1-27 * | 1,4-9 | |
| A | | 2,3,11 ,13,14 | |
| X | PATENTS ABSTRACTS OF JAPAN, vol. 8, no. 168 (C-236)[1605], 3rd August 1984; & JP - A - 59 66 308 (MATSUSHITA DENKI SANGYO K.K.) 14-04-1984 * Abstract * | 1,4-7, 10 | |

**TECHNICAL FIELDS SEARCHED (Int. Cl 4)**

B 01 D

-/-

The present search report has been drawn up for all claims

| Place of search THE HAGUE | Date of completion of the search 13-12-1985 | Examiner HOORNAERT P..G.R.J. |
|---|---|---|

EPO Form 1503. 03.82

## DOCUMENTS CONSIDERED TO BE RELEVANT

| Category | Citation of document with indication. where appropriate, of relevant passages | Relevant to claim | CLASSIFICATION OF THE APPLICATION (Int Cl.4) |
|---|---|---|---|
| A | IDEM | 2,3,11 ,13 | |
| X | PATENTS ABSTRACTS OF JAPAN, vol. 8, no. 225 (C-247)[1662], 16th October 1984; & JP - A - 59 112 802 (MATSUSHITA DENKI SANGYO K.K.) 29-06-1984 | 1,4,7 | |
| A | IDEM | 2,3,5, 6,10, 11,13, 14,17 | |
| X | PATENTS ABSTRACTS OF JAPAN, vol. 8, no. 77 (C-218)[1514], 10th April 1984; & JP - A - 59 301 (MATSUSHITA DENKI SANGYO K.K.) 05-01-1984 * Abstract * | 1,4,5, 7,10 | |
| A | | 2,3,6, 9,11, 13 | TECHNICAL FIELDS SEARCHED (Int Cl.4) |
| Y | EP-A-0 056 512 (BRUNSWICK CORP.) * Abstract; claims 1-3,11-13,30; page 8, lines 14-31; page 12, line 19 - page 13, line 34; page 21, line 25 - page 22, line 15 * | 6,13- 15 | |

--- -/-

The present search report has been drawn up for all claims

| Place of search THE HAGUE | Date of completion of the search 13-12-1985 | Examiner HOORNAERT P.G.R.J. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

# European Patent Office

## EUROPEAN SEARCH REPORT

| | DOCUMENTS CONSIDERED TO BE RELEVANT | | Page 3 |
|---|---|---|---|

| Category | Citation of document with indication, where appropriate, of relevant passages | Relevant to claim | CLASSIFICATION OF THE APPLICATION (Int Cl 4) |
|---|---|---|---|
| A | | 1,11, 16 | |
| | --- | | |
| Y | PATENTS ABSTRACTS OF JAPAN, vol. 8, no. 156 (C-234)[1593], 19th July 1984; & JP - A - 59 59 214 (ASAHI GLASS K.K.) 05-04-1984 * Abstract * | 2,11 | |
| A | IDEM | 1,3-5, 7,13 | |
| | --- | | |
| P,X | PATENTS ABSTRACTS OF JAPAN, vol. 9, no. 66 (C-271)[1789], 26th March 1985; & JP - A - 59 199 001 (ASAHI KASEI KOGYO K.K.) 12-11-1984 * Abstract * | 1,4,5, 7,9,13 | |
| | | | TECHNICAL FIELDS SEARCHED (Int. Cl 4) |
| A | IDEM | 2,3,6, 15 | |
| | --- | | |
| X | PATENTS ABSTRACTS OF JAPAN, vol. 8, no. 71 (C-217)[1508], 3rd April 1984; & JP - A - 58 223 411 (MATSUSHITA DENKI SANGYO K.K.) 26-12-1983 * Abstract * | 1,4,7, 10 | |
| A | IDEM | 2,3,5, 9,13 | |
| | --- | | |
| | ----- | | |

The present search report has been drawn up for all claims

| Place of search THE HAGUE | Date of completion of the search 13-12-1985 | Examiner HOORNAERT P.G.R.J. |
|---|---|---|